Europäisches Patentamt

European Patent Office

Office européen des brevets

(19)

(11) Numéro de publication : **0 020 991**
**B1**

(12) **FASCICULE DE BREVET EUROPÉEN**

(45) Date de publication du fascicule du brevet :
05.09.84

(51) Int. Cl.³ : **H 02 P   8/00, H 02 K  29/00**

(21) Numéro de dépôt : **80102647.7**

(22) Date de dépôt : **13.05.80**

(54) **Unité de codage à fonctionnement optique pour la commande d'un mouvement bidirectionnel et son application à la commande de moteurs pas à pas.**

(30) Priorité : **29.06.79 US 53650**

(43) Date de publication de la demande :
**07.01.81 Bulletin 81/01**

(45) Mention de la délivrance du brevet :
**05.09.84 Bulletin 84/36**

(84) Etats contractants désignés :
**DE FR GB**

(56) Documents cités :
**BE-A-   669 852
FR-A- 1 472 183
FR-A- 2 127 701
FR-A- 2 150 039
US-A- 3 863 118
US-A- 4 024 446
IBM TECHNICAL DISCLOSURE BULLETIN vol. 13, no. 5, octobre 1970, New York US J.R. TAYLOR: "Optical encoder for a stepping motor", page 1248**

(73) Titulaire : **International Business Machines Corporation**
**Old Orchard Road**
**Armonk, N.Y. 10504 (US)**

(72) Inventeur : **Bengner, Lutz Harry Otto**
**13216 Mansfield Dr.**
**Austin, Texas 78732 (US)**
Inventeur : **Kee, Wallace Edward**
**11103 Alhambra Dr.**
**Austin, Texas 78759 (US)**
Inventeur : **Mathews, Raymond Dennis**
**1504 Walsh Dr.**
**Round Rock, Texas 78664 (US)**
Inventeur : **Olson, Stephen Todd**
**3605 Steck No 1408**
**Austin, Texas 78754 (US)**

(74) Mandataire : **Combeau, Jacques**
**Compagnie IBM France Département de Propriété Industrielle**
**F-06610 La Gaude (FR)**

## Description

Domaine technique

La présente invention concerne les unités de codage à fonctionnement optique et plus particulièrement, les unités de codage utilisées dans les systèmes de commande de moteur pas à pas en boucle fermée.

Etat de la technique antérieure

Au cours des dernières années, les moteurs pas à pas fonctionnant à grande vitesse ont été utilisés de manière croissante dans divers domaines tel que celui des imprimantes à grande vitesse dans lesquelles des moteurs pas à pas commandent à la fois l'échappement et la sélection des caractères. La commande en boucle ouverte des moteurs pas à pas présente l'inconvénient de ne pas permettre aux moteurs d'obéir au train d'impulsions d'entrée avec une précision suffisante, ce qui fait que la vitesse maximale de fonctionnement des moteurs est limitée. En outre, une efficacité maximale n'est pas assurée avec un système de commande en boucle ouverte. Les systèmes de commande de moteur pas à pas en boucle fermée suppriment les inconvénients indiqués ci-dessus en renvoyant des signaux de position au moteur pas à pas pour déterminer la position appropriée du rotor dans laquelle des commutations de phase du moteur se produisent. Ainsi, les systèmes de commande de moteur pas à pas en boucle fermée apparaissent à l'heure actuelle comme étant ceux avec lesquels les moteurs pas à pas fonctionnent aux vitesses les plus élevées, avec la meilleure stabilité et la plus grande efficacité. D'une manière classique, les détecteurs de signaux de réaction utilisés dans les systèmes de commande de moteur pas à pas en boucle fermée sont des dispositifs optiques ou magnétiques qui délivrent des impulsions représentant la rotation du moteur pas à pas. De tels détecteurs sont décrits, par exemple, dans le document BE-A-669 852 où différents modes de réalisation d'indicateurs de position d'un moteur pas à pas sont précisés.

Les unités de codage utilisées pour délivrer les signaux de réaction requis par le système de commande du moteur pas à pas peuvent consister en disques crénelés ou à fenêtres montés sur l'arbre du moteur pas à pas de façon à tourner en synchronisation avec celui-ci. Des moyens de détection sont associés au disque crénelé et comprennent une source lumineuse d'un côté du disque et un photo-détecteur de l'autre pour détecter l'absence ou la présence d'un créneau ou d'une fenêtre par détection de la lumière transmise ou non au travers de celui-ci. Dans de tels systèmes de commande de moteur pas à pas, la position du photo-détecteur et, en conséquence, la synchronisation de l'impulsion de détection par rapport au pas, constitue naturellement un aspect très critique du système de commande par signaux de réaction du moteur pas à pas. Les créneaux ou les fenêtres du disque de codage sont, d'une manière classique, uniformément espacés et leur nombre est égal au nombre de pas parcourus pour chaque révolution du moteur. En conséquence, chaque fois qu'un créneau ou une fenêtre traverse le faisceau émis par la source lumineuse et reçue par le photo-détecteur, celui-ci génère une impulsion qui est renvoyée au système de commande du moteur pas à pas.

Pour obtenir le meilleur fonctionnement de ces unités de codage, les moyens de détection peuvent être réglés à un angle fixe que l'on appelle « angle d'avance » ou « angle de commutation » par rapport à la position d'arrêt ou d'équilibre du moteur. L'angle d'avance est en effet l'angle en degrés qui sépare une position d'arrêt donnée et la position qui précède à partir de laquelle la phase correspondante est détectée et commutée. La vitesse d'un moteur pas à pas est donc directement liée à l'angle d'avance.

Dans le cas de certaines unités de codage à fentes ou autres indicateurs rectilignes, l'angle d'avance peut être établi en ajustant la position du moyen de détection ou de l'indicateur détecté par rapport à une position d'arrêt donné du moteur. Dans le cas où le moteur pas à pas ne tourne que dans un sens, les moyens de réglage de la position du moyen de détection par rapport aux bords avant des fentes, sont relativement directs. En général, un seul moyen de détection peut être utilisé. D'autre part, si le moteur pas à pas est un moteur pas à pas réversible et plus particulièrement un moteur pas à pas réversible fonctionnant à grande vitesse et requérant des réglages précis de l'angle d'avance dans les deux sens, le problème posé par ces réglages précis devient plus complexe. On notera que dans le cas où le système de commande par réaction en boucle fermée est un système courant à une impulsion par pas, c'est-à-dire que le disque de codage ne comporte qu'une seule fenêtre par pas, il est très difficile d'amener avec précision le fonctionnement d'un système de codage en boucle fermée d'un moteur réversible à son optimum. Comme on l'indiquera par la suite, ceci peut être assuré en plaçant chaque fenêtre de l'unité de codage au centre équidistant de ses deux positions d'arrêt adjacentes du moteur. Ceci permet d'avoir un angle d'avance égal dans chaque sens et équivalent à la moitié d'un pas à condition que la largeur de l'indicateur soit négligeable.

Cependant, lorsque l'angle d'avance dans un ou dans les deux sens doit avoir une valeur autre qu'un demi-pas, le moyen de détection unique sera pratiquement inutilisable.

De nos jours, une méthode classique pour résoudre le problème indiqué ci-dessus consiste à utiliser deux moyens de détection, c'est-à-dire un premier détecteur disposé de façon à contrôler le disque de codage lorsque l'arbre du moteur pas à pas tourne dans un sens et un deuxième détecteur contrôlant le disque de codage lorsqu'il tourne en sens inverse. Cependant, cette solution requière un équipement supplémentaire et est plus complexe et plus onéreuse que la méthode de contrôle par un seul moyen de détection.

Des problèmes similaires sont rencontrés avec les moteurs pas à pas linéaires lorsque ceux-ci sont utilisés en mode réversible.

Exposé de l'invention

La présente invention permet principalement de réaliser une unité de codage à fonctionnement optique pouvant détecter régulièrement la portée d'un mouvement bidirectionnel.

Elle permet également de réaliser une unité de codage rotative à fonctionnement optique dont les moyens de détection sont réglables de façon que l'angle de rotation puisse être détecté indépendamment du sens de rotation.

Elle permet aussi de réaliser un système de commande en boucle fermée d'un moteur pas à pas réversible, comportant des moyens détectant et/ou réglant régulièrement la valeur de l'angle de rotation ou de l'angle d'avance indépendamment du sens de rotation.

La présente invention permet encore de réaliser un système de commande en boucle fermée d'un moteur pas à pas réversible comportant des moyens de réglage de la position des moyens de détection de façon que les angles d'avance puissent être indépendamment ajustés, sans tenir compte du sens de rotation du moteur pas à pas, et elle permet enfin de réaliser un système de commande en boucle fermée d'un moteur pas à pas réversible utilisant un seul moyen de détection pouvant déterminer avec précision l'avancement pas à pas du moteur indépendamment du sens de sa rotation.

La présente invention permet d'améliorer des unités de codage rotatives classiques qui comportent des fenêtres ou fentes de détection placées dans des positions fixes les unes par rapport aux autres, des moyens entraînant ces fenêtres ou fentes en rotation autour d'un axe et des moyens détectant ces fenêtres ou fentes. La présente invention implique l'utilisation de fenêtres ou fentes présentant un premier bord orienté radialement par rapport à l'axe de rotation et un deuxième bord angulairement décalé par rapport à cet axe.

En outre, des moyens de réglage des moyens de détection sont prévus de façon que ces moyens de détection puissent être ajustés par rapport au premier bord rencontré qui sera le bord avant lorsque les fenêtres ou fentes seront entraînées en rotation dans un sens et par rapport au deuxième bord qui sera le bord avant lorsque les fenêtres ou fentes seront entraînées dans le sens opposé. Avec ce type de structure de fenêtres ou fentes, les moyens de réglage de la position des moyens de détection peuvent comprendre des moyens déplaçant radialement les moyens de détection par rapport à l'axe pour modifier leurs positions par rapport au deuxième bord et des moyens pour déplacer les moyens de détection sur un arc concentrique à la trajectoire de rotation de l'unité de codage pour modifier la position des moyens de détection par rapport au premier bord.

De cette manière, un moyen de détection unique peut être indépendamment ajusté par rapport aux premier et deuxième bords des fenêtres ou fentes. Ainsi, l'unité de codage rotative utilisée dans un système de commande en boucle fermée d'un moteur pas à pas réversible constitue un moyen de détection simple et unique dans lequel l'angle d'avance peut être facilement réglé pour chaque sens de rotation du système sans affecter l'ajustement de l'angle d'avance dans le sens opposé.

Toujours selon les enseignements de la présente invention, il n'est pas nécessaire que les fenêtres ou fentes soient orientées radialement par rapport à l'axe de rotation. Dans ce cas, les bords des fenêtres ou fentes ne doivent pas être parallèles. Un moyen de détection unique peut donc être utilisé pour ajuster l'angle d'avance qui demeurera alors consistant indépendamment du sens de rotation du moteur pas à pas. Chacune des fenêtres ou fentes peut correspondre respectivement à au moins une portion fixée ou à la totalité d'un pas de moteur.

Il est évident que le principe de la présente invention tel qu'appliqué aux moteurs pas à pas rotatifs commandés en boucle fermée pourrait également l'être aux moteurs pas à pas linéaires commandés en boucle fermée. Dans un de ces moteurs pas à pas linéaires, le moyen de détection unique pourrait être utilisé d'une manière similaire pour détecter l'importance du mouvement indépendamment de son sens. Etant donné que les moteurs pas à pas linéaires classiques utilisent une bande ou un ruban linéaire à fentes ou à fenêtres entraîné en synchronisation avec le mouvement linéaire du moteur pas à pas à la place du disque rotatif à fentes ou à fenêtres des moteurs rotatifs, les fentes ou fenêtres de la bande linéaire peuvent avoir une configuration identique à celle du disque de codage de la présente invention. Ainsi une bande linéaire présentera une série de fentes ou fenêtres identiques et également espacées avec un premier bord perpendiculaire à sa trajectoire linéaire et un deuxième bord non perpendiculaire à cette trajectoire et qui coupera de préférence le premier bord. En fait, cette configuration est pratiquement identique à celle des fentes ou fenêtres des disques rotatifs puisque l'on sait que les premiers bords des fentes ou fenêtres des disques rotatifs sont disposés radialement par rapport à l'axe de rotation. Elles sont donc perpendiculaires à la trajectoire de rotation.

D'autres objets, caractéristiques et avantages de la présente invention ressortiront mieux de l'exposé qui suit, fait en référence aux dessins annexés à ce texte, qui représentent un mode de réalisation préféré de celle-ci et dans lesquels les mêmes portent les mêmes références.

Brève description des figures

La Figure 1 est une vue en perspective du dispositif de la présente invention avec une partie du moyen de support en éclaté pour présenter le moyen de détection.

La Figure 2 est une vue de côté schématique du dispositif de la Figure 1.

La Figure 3 est une vue schématique partielle d'une partie d'un moteur pas à pas de l'art antérieur, présentant le disque de codage et le moyen de détection associé.

La Figure 4 est un schéma montrant la chronologie des impulsions détectées dans le dispositif de l'art antérieur de la Figure 3.

La Figure 5 est une vue schématique partielle d'un autre type de moteur pas à pas de l'art antérieur et montre la relation existant entre le disque de codage et le moyen de détection.

La Figure 6 est un diagramme chronologique du dispositif de la Figure 5 montrant la chronologie des impulsions de réaction lorsque le dispositif tourne dans les sens anti-horaire et horaire.

La Figure 7 est une vue schématique partielle d'une partie d'un moteur pas à pas et montre la relation existant entre le disque de codage et le moyen de détection dans la réalisation préférée de la présente invention.

La Figure 8 est un diagramme chronologique du dispositif de la Figure 7 montrant la chronologie relative des impulsions de réaction lorsque le dispositif tourne dans les sens horaire et anti-horaire.

La Figure 9 est une vue schématique partielle d'une partie d'un moteur pas à pas montrant la relation existant entre le disque de codage et le moyen de détection dans une autre réalisation possible du dispositif de la présente invention.

La Figure 10 est un diagramme chronologique du dispositif de la Figure 9 montrant la chronologie des impulsions de réaction lorsque le dispositif tourne dans les sens horaire et anti-horaire pour chacune des deux positions du moyen de détection réglable.

Description de l'invention

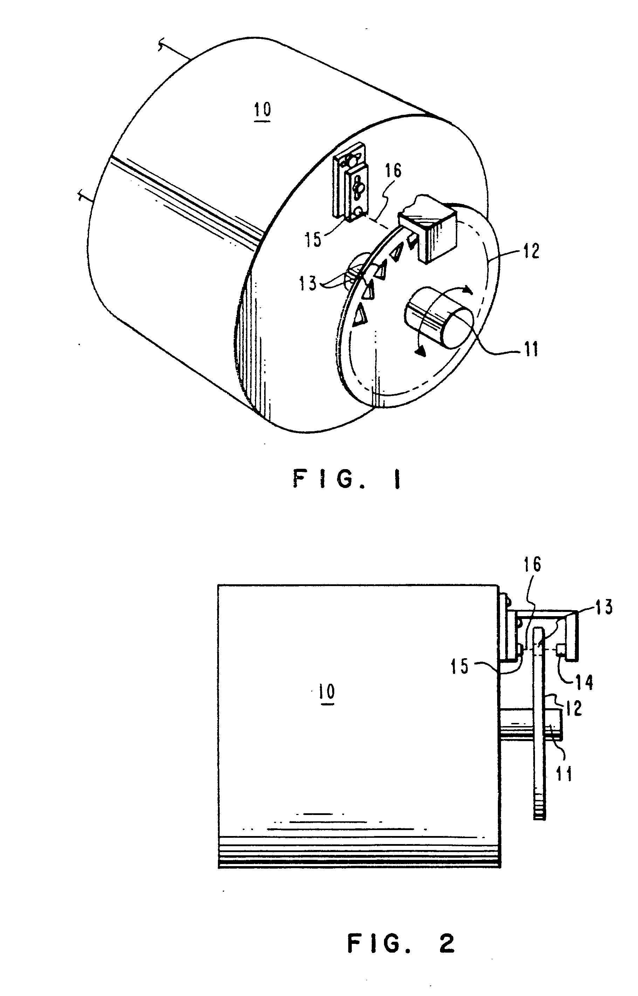

On se reportera aux Figures 1 et 2 pour une description générale du dispositif auquel la présente invention apporte des améliorations. un moteur pas à pas réversible 10 qui ne sera pas décrit en détail, entraîne l'arbre 11 en rotation sur une série de pas, soit dans le sens horaire, soit dans le sens anti-horaire. Le moteur pas à pas fonctionne dans un système à boucle fermée classique impliquant le retour d'un signal de position au moteur pour déterminer les positions angulaires appropriées du rotor dans lesquelles la commutation de phase du moteur doit se produire. L'unité de codage qui délivre l'information requise renvoyée au système comprend un disque de codage 12 présentant des fenêtres similaires 13 équidistantes les unes des autres. La source lumineuse 14 disposée d'un côté du disque 12 émet un faisceau lumineux détecté par un moyen de photo-détection telle que la cellule photo-électrique 15 chaque fois qu'une fenêtre 13 traverse la trajectoire 16 du faisceau lumineux et permet ainsi la transmission de celui-ci de la source 14 à la cellule photo-électrique 15. Comme on le verra plus en détail ultérieurement la cellule photo-électrique 15 est montée mobile dans deux directions de façon à pouvoir ajuster sa position par rapport à la fenêtre 13.

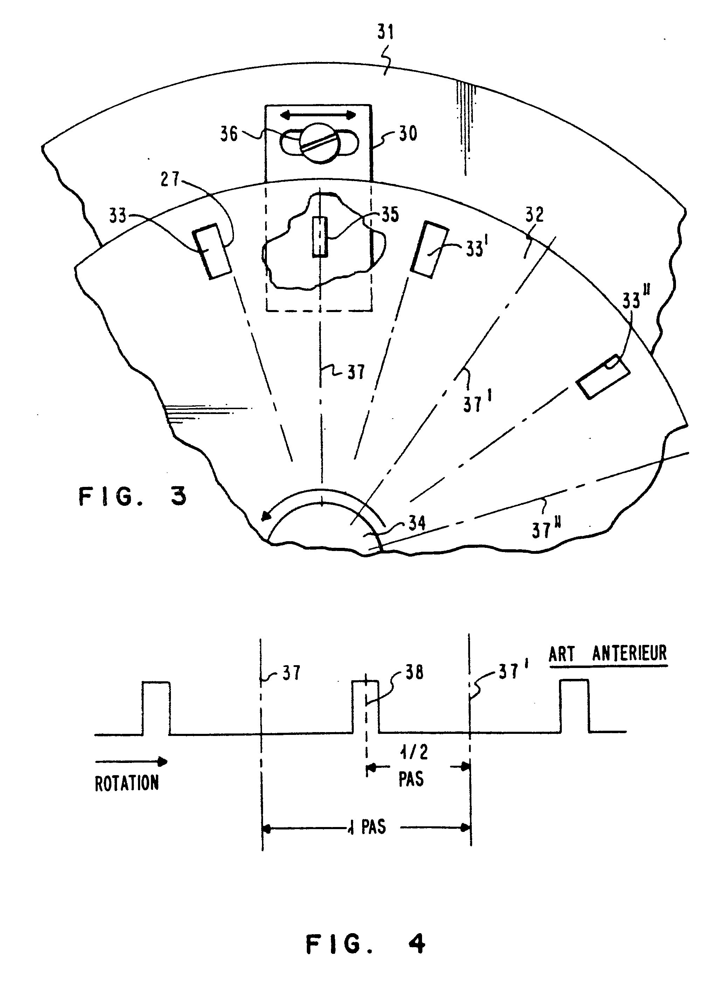

Avant de décrire plus en détail l'unité de codage de la présente invention, on traitera brièvement de certains problèmes rencontrés dans les unités de codage de l'art antérieur. La Figure 3 représente un système classique de commande d'un moteur pas à pas par réaction en boucle fermée à « une impulsion par pas » et utilisant un seul moyen de détection. Le disque de codage 32 comporte des fenêtres 33 et un moyen (non représenté) transmettant un faisceau lumineux au travers de ces fenêtres. Le moyen de détection 30 est formé d'une cellule photo-électrique 35 et du moyen de montage à boutonnière et à vis de réglage 36 et est monté sur le bâti 31 du moteur pas à pas de façon à pouvoir être ajusté dans les deux sens indiqués par la double flèche. Dans le cas où l'arbre 34 du moteur pas à pas sur lequel le disque 32 est monté, ne tourne que dans un seul sens, par exemple le sens horaire, le moyen de détection 30 peut être déplacé latéralement comme indiqué par la double flèche, par rapport au bord avant 27 de la fenêtre 33 pour le réglage de l'angle d'avance. Dans la description de la présente invention, on considèrera l'angle d'avance comme étant simplement le nombre de degrés précédant une position d'arrêt donné avec lequel la commutation de phase doit se produire. La position d'arrêt est en fait la position d'équilibre. Dans la plupart des moteurs pas à pas, il s'agit de la position où le rotor est en alignement avec le stator pour un pas particulier. Dans la figure, les positions d'arrêt de l'arbre 34 du moteur pas à pas sont indiquées par les lignes 37, 37' ou 37''. Dans le cas de la Figure 3, la position d'arrêt 37 est la position verticale et au pas suivant, les positions d'arrêt 37' et 37'' seront avancées de façon qu'elles soient tour à tour verticales comme la position d'arrêt 37.

Dans le cas d'un moteur pas à pas monodirectionnel fonctionnant normalement, on suppose que l'arbre 35 tourne dans le sens antihoraire comme indiqué sur la figure. Etant donné que la cellule photo-électrique 35 est disposée équidistante des fenêtres adjacentes 33 et 33' du disque de codage, l'angle d'avance classique est égal à un demi-pas. Lorsque le moteur avance d'un pas de la position d'arrêt 37 à la position d'arrêt 37', le bord avant de la fenêtre 33' coupe la cellule photo-électrique 35 au milieu du chemin, ce qui provoque la génération de l'impulsion de réaction 38 de la Figure 4 pour le moteur pas à pas de la Figure 3. L'impulsion 38 précède la position d'arrêt 37' d'un demi-pas. Ainsi, l'angle d'avance est égal à un demi-pas. Dans un tel système monodirectionnel, la position d'une impulsion de réaction particulière telle que l'impulsion 38, par rapport aux positions d'arrêt, peut être facilement ajustée en décalant latéralement la position de la cellule photo-électrique 35 par l'intermédiaire d'un moyen de support à vis et boutonnière de réglage 36. Cependant, ce système monodirectionnel classique devient inutilisable si le dispositif de la Figure 3 fonctionne en mode réversible. Par exemple si la cellule photo-électrique 35 est décalée vers la fenêtre 33' et en conséquence vers la position d'arrêt 37' pour réduire l'angle d'avance lorsque l'arbre 34 du moteur pas à pas tourne dans le sens antihoraire, la distance entre la position d'arrêt initiale de la cellule photo-électrique 35 par rapport à la fenêtre 33 et en conséquence, sa position d'arrêt associée, sera accrue proportionnellement. Donc, si l'arbre 34 du moteur pas à pas est soumis à une rotation en sens inverse, c'est-à-dire tourne dans le sens horaire, l'angle d'avance dans le sens horaire sera proportionnellement plus important. Avec le moyen de détection unique du dispositif de la Figure 3, il est ainsi pratiquement impossible d'ajuster l'angle d'avance pour un arbre de moteur tournant dans un sens sans dérégler l'angle d'avance pour le même arbre tournant en sens inverse.

Le seul mode de fonctionnement bidirectionnel possible pour le dispositif de la Figure 3 sera celui dans lequel la cellule photo-électrique 35 sera maintenue comme dans la Figure 3, en un point exactement équidistant des fenêtres adjacentes 33 et 33'. Dans cette position, l'angle d'avance demeurera égal à un demi-pas dans un sens de rotation ou dans l'autre. Cependant, ce dispositif est inutilisable avec la plupart des moteurs pas à pas car il ne permet aucune variation de l'angle d'avance. En outre, il ne permet même pas de faibles réglages de l'angle d'avance pour compenser les variations notées dans le fonctionnement du moteur pas à pas par rapport aux spécifications.

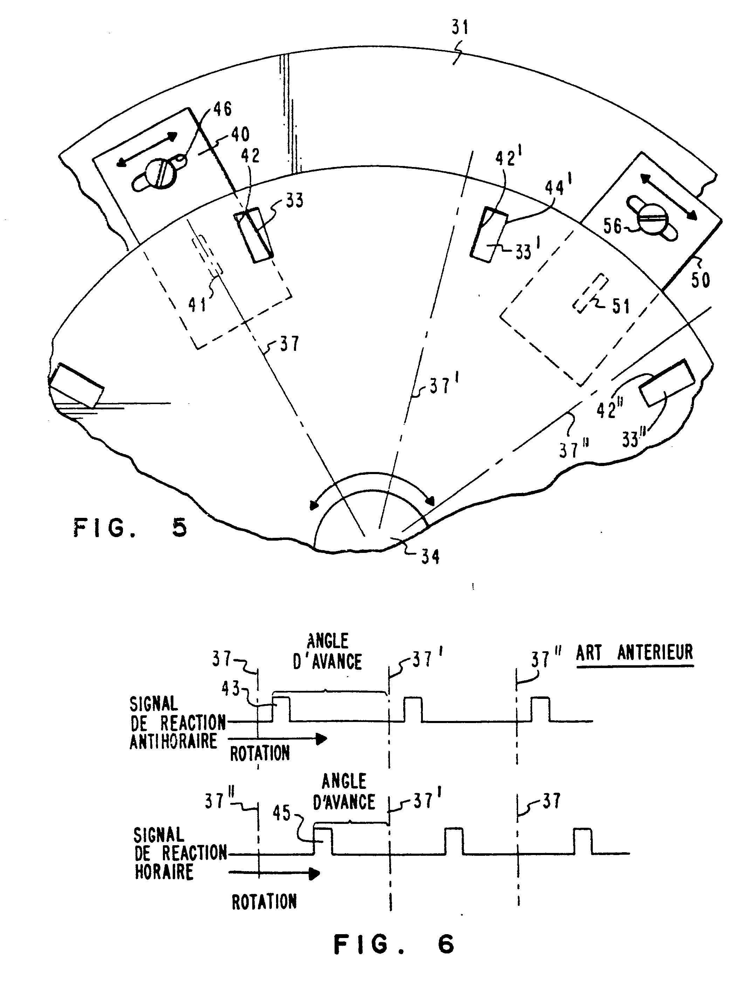

En conséquence, les systèmes à moteur pas à pas réversible de l'art antérieur utilisent le moyen de détection représenté à la Figure 5. L'ensemble de détection monté sur le bâti 31 du moteur pas à pas comprend deux moyens de détection 40 et 50 qui sont pratiquement similaires au moyen de détection de la Figure 3 avec les cellules photo-électriques 41 et 51 et les moyens de support à boutonnière et vis de réglage 46 et 56 respectivement, pour le réglage latéral de celle-ci. Ainsi, lorsque l'arbre 34 tourne dans le sens antihoraire la cellule photo-électrique 41 est excitée. Cette cellule détecte les bords avant 42, 42' et 42" des fenêtres 33, 33' et 33", respectivement. Sur la Figure 5, la cellule photo-électrique 41 est à la position d'arrêt initiale 37 et le bord avant 42 de la fenêtre 33 traversera la cellule photo-électrique 41 tout au début du pas pour générer l'impulsion de réaction 43 comme montré par le diagramme chronologique du fonctionnement dans le sens antihoraire de la Figure 6. Ainsi, l'angle d'avance consistera en une partie substantielle, c'est-à-dire approximativement 90 % du pas jusqu'à la position d'arrêt suivante 37'.

D'autre part, le moyen de détection étant dans la position représentée à la Figure 5, lorsque l'arbre 34 du moteur pas à pas est entraîné en rotation dans le sens horaire, le bord avant 44' de la fenêtre 33' coupe la cellule photo-électrique 51 pour générer l'impulsion de réaction 45 représentée dans le diagramme chronologique de la Figure 6 pour former un angle d'avance légèrement supérieur à un demi-pas. Avec le dispositif de la Figure 5, étant donné que les positions des cellules photo-électriques 41 et 51 peuvent être réglées latéralement d'une manière indépendante par l'intermédiaire de leurs supports à boutonnière et à vis de réglage respectifs 46 et 56, l'angle d'avance dans un sens peut être ajusté indépendamment de l'angle d'avance dans l'autre sens. Le dispositif permet des ajustements relativement précis pour l'obtention du même angle d'avance de n'importe quelle valeur choisie à la fois dans le sens horaire et dans le sens antihoraire du fonctionnement du moteur pas à pas.

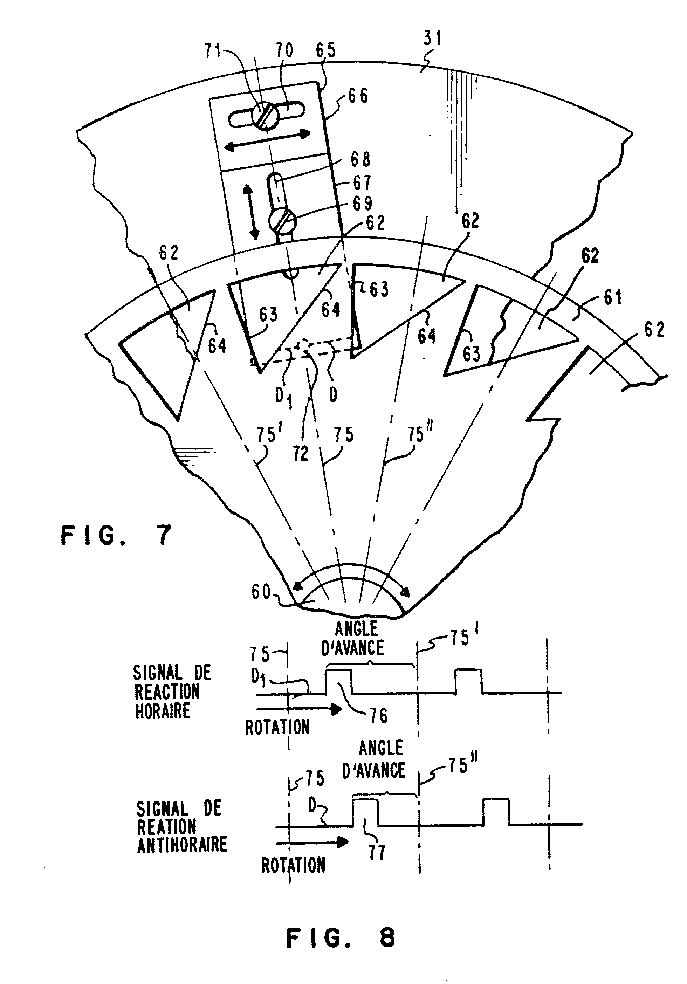

La configuration caractéristique des fenêtres du disque de codage de la présente invention combinée aux moyens de détection qui peuvent être ajustés dans deux directions, rend possible l'utilisation d'un seul moyen de détection pour la génération d'impulsions de réaction dans un système de commande de moteur pas à pas réversible en boucle fermée. La position du moyen de détection peut être réglée indépendamment pour permettre l'établissement d'angles d'avance variables sans tenir compte du sens de rotation du moteur. La Figure 7 montre un moteur pas à pas monté dans le bâti 31 et qui tourne autour de l'arbre 60. Les fenêtres 62 du disque de codage 61 ont une configuration caractéristique. Chaque fenêtre comporte un premier bord 63 orienté radialement par rapport à l'arbre 60 et un deuxième bord 64 non radial qui, de préférence, coupe le bord 63. Le moyen de détection 65 est similaire au moyen de détection des Figures 1 et 2. Le support 66 est fixé au bâti 31 du moteur pas à pas. Le support 67 est monté coulissant sur le support 66 par l'intermédiaire de la boutonnière 68 et de la vis 69, dans les deux directions indiquées par la double flèche et qui sont orientées radialement par rapport à l'axe de rotation de l'arbre 60 du moteur pas à pas. D'une manière similaire, par l'intermédiaire de la boutonnière 70 et de la vis 71, le moyen de détection 65 est mobile dans les deux directions indiquées par la double flèche, sur un arc de cercle concentrique à l'axe de rotation de l'arbre 60. Par l'intermédiaire de ces deux moyens de réglage, la cellule photo-électrique 72 peut être positionnée de façon à ajuster indépendamment les angles d'avance dans les sens horaire et antihoraire. Tout d'abord, pour ajuster l'angle d'avance pour la rotation dans le sens antihoraire du moteur pas à pas, on déplace la boutonnière 70 et la vis 71 de façon à choisir la distance D séparant la cellule photo-électrique 72 montée sur le support 67 du bord 63 qui est le bord avant de la fenêtre de détection 62 du disque de codage 61 lorsque l'arbre 60 du moteur pas à pas tourne dans le sens antihoraire. La distance D est en effet une distance angulaire, c'est-à-dire qu'elle correspond à l'angle que fait le bord radial 63 et le rayon passant par la cellule photo-électrique 72 et partant de la rotation de l'arbre 60 pris comme centre.

Puis, pour régler l'angle d'avance pour la rotation du moteur dans le sens horaire, on peut déplacer radialement la cellule photo-électrique 72 par l'intermédiaire de la boutonnière 68 et de la vis 69 et la placer dans une position dans laquelle la distance $D_1$ entre la cellule et le bord non radial 64 (qui sera le bord avant en rotation dans le sens horaire) assure un angle d'avance désiré. On notera qu'en raison du mouvement radial de la cellule 72, l'angle que font le rayon sur lequel se déplace la cellule 72 et le bord radial 63 demeure le même et qu'en conséquence, la distance angulaire D précédemment ajustée demeure constante.

De cette manière, les distances D et $D_1$ qui déterminent les angles d'avance dans les sens antihoraire et horaire, respectivement, demeurent constantes. L'indépendance de l'ajustement des angles d'avance en n'utilisant qu'un seul moyen de détection, est montré par le diagramme chronologique de la Figure 8. En supposant une position initiale dans laquelle la position d'arrêt 75 est, à titre d'exemple, alignée avec la cellule photo-électrique 72, puis en effectuant un pas dans le sens horaire de la position d'arrêt 75 à la position d'arrêt 75' après qu'une distance $D_1$ ait été parcourue, la cellule photo-électrique 72 coupe le bord avant 64 de la fenêtre 62 correspondante pour générer l'impulsion de réaction 75 de la Figure 8. L'angle d'avance obtenu est indiqué dans la Figure 8 entre l'impulsion 76 et la position d'arrêt suivante 75.

D'autre part lorsque l'arbre du moteur pas à pas 60 est entraîné en rotation dans le sens antihoraire sur un pas entre la position d'arrêt 75 et la position d'arrêt 75", la cellule photo-électrique 72 est coupée par le bord avant 63 de la fenêtre 62 correspondante après que la distance angulaire D ait été parcourue. Ceci provoque la génération de l'impulsion de réaction 77 et l'angle d'avance indiqué dans le diagramme chronologique de la Figure 8 entre le début de l'impulsion 77 et la position d'arrêt 75".

Etant donné que pour la plupart des fonctions de l'imprimante, l'angle d'avance doit être de préférence le même dans les deux sens de rotation du moteur, la position de la cellule photo-électrique 72 est d'abord ajustée par rapport au bord de fenêtre 63 jusqu'à ce que la distance D assure l'angle d'avance désiré. Puis, on déplace radialement la cellule photo-électrique 72 jusqu'à ce que $D_1$ soit égal à D.

Cet agencement permet à l'appareil de fonctionner avec des angles d'avance égaux. L'opérateur a cependant toujours la possibilité d'effectuer des réglages mineurs de la position du moyen de détection pour compenser les effets des variations transitoires appliquées par l'appareil à l'angle d'avance dans un sens sans modifier l'angle d'avance dans l'autre sens. De plus, le dispositif peut être avantageusement utilisé dans les moteurs pas à pas à vis sans fin verticales pour lesquels des angles d'avance différents sont requis dans chaque sens.

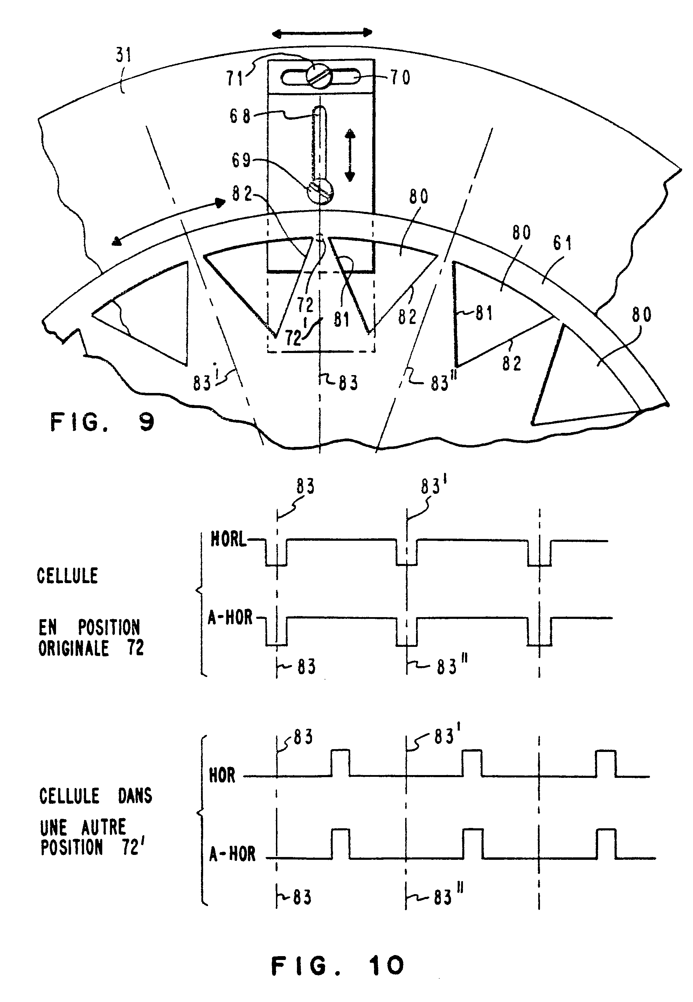

La présente invention permet également de réaliser une structure dans laquelle les angles d'avance dans les deux sens sont toujours égaux mais peuvent être modifiés. Un seul moyen de détection peut être utilisé pour la génération de signaux de réaction dans un système de commande de moteur pas à pas en boucle fermée qui présente des fenêtres ne comportant pas de bord radial par rapport à l'axe de rotation. Cependant, tandis que les angles d'avance pourront être modifiés dans une telle structure, l'angle d'avance dans le sens horaire sera toujours égal à l'angle d'avance dans le sens antihoraire. Dans le dispositif de la Figure 9, les fenêtres de détection 80 présentent une configuration dans laquelle les bords 81 et 82 sont de longueur égale, formant ainsi un triangle isocèle. Le moyen de réglage latéral comprenant la boutonnière 70 et la vis 71 est principalement utilisé pour régler la cellule photo-électrique 72 dans une position équidistante des côtés 81 et 82. Une fois que ce réglage est effectué, en déplaçant radialement la cellule photo-électrique 72 au moyen de la boutonnière 68 et de la vis 69, on peut modifier la distance séparant la cellule photo-électrique 72 des côtés adjacents 81 et 82 afin de modifier l'angle d'avance d'une manière égale dans chaque sens de rotation. Les diagrammes chronologiques de la Figure 10 illustrent la génération des impulsions lorsque la cellule photo-électrique 72 est dans sa position originale, puis amenée dans une autre position possible représentée en lignes interrompues et référenciée 72' et que le moteur pas à pas et en conséquence le disque de codage 61, sont entraînés en rotation depuis une position d'arrêt initiale 83, sur un pas dans le sens horaire jusqu'à la position d'arrêt 83', puis en sens inverse, depuis la position d'arrêt 83, dans le sens antihoraire, jusqu'à la position d'arrêt 83".

Comme indiqué précédemment, la structure de la présente invention peut également être appliquée aux systèmes de commande de moteur pas à pas linéaire en boucle fermée. Dans ce cas, les fenêtres 62 de la Figure 7 ont la même configuration sauf qu'elles sont agencées d'une manière rectiligne sur une bande à fenêtres au lieu d'être disposées circulairement sur un disque. Les bords 63 sont perpendiculaires à la trajectoire de déplacement de la bande à fenêtres et séparés les uns des autres par une distance égale. La bande à fenêtres se déplacera en synchronisation avec le mouvement du moteur pas à pas linéaire. Dans une telle structure, on peut n'utiliser qu'une seule cellule photo-électrique telle que la cellule photo-électrique 72 de la Figure 7. Puis, on ajustera tout d'abord la position de la cellule photo-électrique par rapport au bord 63, puis on la déplacera sur une trajectoire perpendiculaire à la trajectoire de déplacement de la bande jusqu'à ce qu'elle soit à la distance désirée du bord 64.

**Revendications**

1. Unité de codage à fonctionnement optique pour la commande d'un mouvement birectionnel comprenant une série de fenêtres ou fentes de détection (62, 80), à position fixée l'une par rapport à l'autre, des moyens (60, 61) pour entraîner en rotation ces fenêtres ou fentes (62, 80) autour d'un axe, caractérisé en ce qu'il comprend : un moyen de détection optique unique (72) de ces fenêtres ou fentes (62, 80), positionné sur le trajet de rotation de ces fenêtres ou fentes (62, 80), et en ce que chacune de ces fenêtres ou fentes (62, 80) possède un premier (63, 81) et un second (64, 82) bords non parallèles, traversant ce trajet de rotation de ces fenêtres ou fentes (62, 80) et ce moyen de détection optique unique (72) peut être déplacé de façon que sa position puisse être réglée par rapport à ces premiers bords (63, 81) qui sont les bords avant quand ces fenêtres ou fentes (62, 80) sont entraînées en rotation dans une direction et par rapport à ces seconds bords (64, 82) qui sont les bords avant quand ces fenêtres ou fentes (62, 80) sont entraînées en rotation dans la direction opposée.

2. Unité de codage à fonctionnement optique pour la commande d'un mouvement bidirectionnel comprenant une série de fenêtres ou fentes de détection (62, 80) à position fixée l'une par rapport à l'autre, des moyens pour entraîner ces fenêtres ou fentes (62, 80) le long d'un trajet linéaire, caractérisé en ce qu'il comprend un moyen de détection optique unique (72) de ces fenêtres ou fentes (62, 80) positionné sur ce trajet linéaire de ces fenêtres ou fentes, et en ce que : chacune de ces fenêtres ou fentes (62, 80) possède un premier (63, 81) et un second (64, 82) bords non parallèles, traversant ce trajet linéaire de ces fenêtres ou fentes (62, 80) et ce moyen de détection optique unique (72) peut être déplacé de façon que sa position puisse être réglée par rapport à ces premiers bords (63, 81) qui sont les bords avant quand ces fenêtres ou fentes (62, 80) sont entraînées le long du trajet linéaire dans une direction et par rapport à ces seconds bords (64, 82) qui sont les bords avant quand ces fenêtres ou fentes (62, 80) sont entraînées le long du trajet linéaire dans la direction opposée.

3. Unité de codage selon la revendication 1, caractérisé en ce que le premier bord (63) de chaque fenêtre ou fente (62) est radial par rapport à l'axe de rotation.

4. Unité de codage selon la revendication 2, caractérisé en ce que le premier bord (63) de chaque fenêtre ou fente (62) est perpendiculaire au trajet linéaire.

5. Unité de codage selon l'une des revendications 1 ou 3, caractérisé en ce qu'il comprend des moyens (68, 69) pour déplacer le moyen de détection (72) de manière radiale par rapport à l'axe de rotation et des moyens (70, 71) pour déplacer le moyen de détection (72) suivant un arc concentrique au trajet de rotation.

6. Unité de codage selon l'une des revendications 2 ou 4, caractérisé en ce qu'il comprend des moyens (68, 69) pour déplacer le moyen de détection (72) perpendiculairement au trajet linéaire, et des moyens (70, 71) pour déplacer le moyen de détection (72) parallèlement au trajet linéaire.

7. Moteur pas à pas rotatif réversible à système de commande en boucle fermée comprenant lors de chaque révolution un nombre prédéterminé de pas égaux caractérisé en ce qu'il comprend une unité de codage selon l'une des revendications 1, 3, 5, cette unité de codage tournant en synchronisation avec ce moteur pas à pas et chacune des fenêtres ou fentes (62, 80) correspondant respectivement à au moins une portion fixée d'un pas de moteur ou à la totalité d'un pas de moteur.

8. Moteur pas à pas linéaire réversible à système de commande en boucle fermée se déplaçant en nombre de pas égaux, caractérisé en ce qu'il comprend une unité de codage selon l'une des revendications 2, 4, 6, cette unité de codage se déplaçant en synchronisation avec ce moteur pas à pas et chacune des fenêtres ou fentes (62, 80) correspondant respectivement à au moins une portion fixée d'un pas de moteur ou à la totalité d'un pas de moteur.

**Claims**

1. An optically operating encoder apparatus for controlling a bidirectionnal movement comprising a plurality of sensing windows or slots (62, 80) having fixed positions with respect to each other, means (60, 61) for rotating said windows or slots (62, 80) about an axis, characterized in that it includes : a single means (72) for optically sensing said windows or slots (62, 80) positioned along the path of rotation of said windows or slots (62, 80), and in that each of said windows or slots (62, 80) has a first (63, 81) and a second (64, 82) non-parallel edges traversing said path of rotation of said windows or slots (62, 80), and said single optical sensing means (72) can be moved so that the position thereof can be adjusted with respect to said first edges (63, 81) which are the leading edges when said windows or slots (62, 80) are rotated in one direction and to said second edges (64, 82) which are the leading edges when said windows or slots (62, 80) are rotated in the opposite direction.

2. An optically operating encoder apparatus for controlling a bidirectionnal movement comprising a plurality of sensing windows or slots (62, 80) having fixed positions with respect to rach other, means for moving said windows or slots (62, 80) along a linear path, characterized in that it includes : a single means (72) for optically sensing said windows or slots (62, 80) positionned along said linear path of said windows or slots, and in that : each of said windows or slots (62, 80) has a first (63, 81) and a second (64, 82) non parallel edges, traversing said linear path of said windows or slots (62, 80), and said single optical sensing means (72) can be moved so that the position thereof can be adjusted with respect to said first edges (63, 81) which are the leading edges when said windows or slots (62, 80) are moved along said linear path in one direction and with respect to said second edges (64, 82) which are the leading edges when said windows or slots (62, 80) are moved along the linear path in the opposite direction.

3. Encoder apparatus according to claim 1, characterized in that the first edge (63) of each window or slot (62) is radial to the axis of rotation.

4. Encoder apparatus according to claim 2, characterized in that the first edge (63) of each window or slot (62) is perpendicular to the linear path.

5. Encoder apparatus according to claim 1 or 3, characterized in that it includes means (68, 69) for radially moving sensing means (72) with respect to the axis of rotation and means (70, 71) for moving sensing means (72) in an arc concentric with said path of rotation.

6. Encoder apparatus according to claim 2 or 4, characterized in that it includes means (68, 69) for moving sensing means (72) along a path perpendicular to the linear path, and means (70, 71) for moving said sensing means (72) along a path parallel to said linear path.

7. A closed loop bidirectionnal rotating step motor rotating through each motor revolution in a predetermined number of equal steps characterized in that it includes an encoder apparatus according to any one of claims 1, 3, 5, said encoder apparatus rotating in synchronization with said step motor and each of said windows or slots (62, 80) respectively corresponding to at least a fixed portion of a motor step or to a full motor step.

8. A closed loop bidirectionnal linear step motor moving in a number of equal steps, characterized in that it includes an encoder apparatus according to any one of claims 2, 4, 6, said encoder apparatus moving in synchronization with said step motor and each of said windows or slots (62, 80) respectively corresponding to at least a fixed portion of a motor step or to a full motor step.

**Ansprüche**

1. Optisch arbeitende Kodiereinheit zur Steuerung einer Bewegung in zwei Richtungen mit einer Reihe von abtastbaren Öffnungen oder Schlitzen (62, 80), deren Lagen im Verhältnis des einen zu dem anderen festgesetzt sind, mit Mitteln (60, 61) zum drehbaren Antrieb der Öffnungen oder Schlitzen (62, 80) um eine Achse, dadurch gekennzeichnet, dass sie aufweist : ein einziges optisches Abtastmittel (72) für die Öffnungen oder Schlitzen (62, 80), das auf der umlaufenden Strecke der Öffnungen oder Schlitzen (62, 80) gelagert ist, und dass jede Öffnung oder jeder Schlitz (62, 80) einen ersten (63, 81) und zweiten nicht parallelen Rand (64, 82), wobei diese Ränder die umlaufende Strecke der Öffnungen oder Schlitzen (62, 80) durchqueren, das einzige optische Abtastmittel (72) so verschieben werden kann, dass seine Lage hinsichtlich der ersten Ränder (63, 81), die beim drehbaren Antrieb der Öffnungen oder Schlitzen (62, 80) in einer Richtung die vorderen Ränder sind, und hinsichtlich der zweiten Ränder (64, 82) eingestellt werden kann, die beim drehbaren Antrieb der Öffnungen oder Schlitzen (62, 80) in der entgegensetzten Richtung die vorderen Ränder sind.

2. Optisch arbeitende Kodiereinheit zur Steuerung einer Bewegung in zwei Richtungen mit einer Reihe von abtastbaren Öffnungen oder Schlitzen (62, 80), deren Lagen im Verhältnis des einen zu dem anderen festgesetzt sind, mit Mitteln (60, 61) zum Antrieb der Öffnungen oder Schlitzen (62, 80) entlang einer linearen Strecke, dadurch gekennzeichnet, dass sie aufweist : ein einziges Abtastmittel (72) für die Öffnungen oder Schlitzen (62, 80), das entlang der linearen Strecke der Öffnungen oder Schlitzen gelagert ist, und dass jede Öffnung oder jeder Schlitz (62, 80) einen ersten (63, 81) und zweiten (64, 82) nicht parallelen Rand aufweist, wobei diese Ränder die lineare Strecke der Öffnungen oder Schlitzen (62, 80) durchqueren, und das einzige optische Mittel (72) so verschieben werden kann, dass seine Lage hinsichtlich der ersten Ränder (63, 81), die beim Antrieb der Öffnungen oder Schlitzen (62, 80) entlang der linearen Strecke in einer Richtung die vorderen Ränder sind, und hinsichtlich der zweiten Ränder (64, 82) eingestellt werden kann, die beim Antrieb der Öffnungen oder Schlitzen (62, 80) entlang der linearen Strecke in der entgegengesetzten Richtung die vorderen Ränder sind.

3. Kodiereinheit nach Anspruch 1, dadurch gekennzeichnet, dass der erste Rand (63) jeder Öffnung oder jedes Schlitzes (62) hinsichtlich der Drehachse radial liegt.

4. Kodiereinheit nach Anspruch 2, dadurch gekennzeichnet, dass der erste Rand (63) jeder Öffnung oder jedes Schlitzes (62) zu der linearen Strecke senkrecht angeordnet ist.

5. Kodiereinheit nach einem der Ansprüche 1 oder 3, dadurch gekennzeichnet, dass sie Mittel (68, 69) zur hinsichtlich der Drehachse radialen Verschiebung des Abtastmittels (72) und Mittel (70, 71) zur Verschiebung des Abtastmittels (72) jenach einem gegenueber der umlaufenden Strecke konzentrischen Bogen aufweist.

6. Kodiereinheit nach einem der Ansprüche 2 oder 4, dadurch gekennzeichnet, dass er Mittel (68, 69) zur zu der linearen Strecke senkrechten Verschiebung des Abtastmittels (72) und Mittel (70, 71) zur zu der linearen Strecke parallelen Verschiebung des Abtastmittels (72) aufweist.

7. Umsteuerbarer Rotations-Schrittmotor mit einem geschlossenen Regelkreis mit einer vorbestimmten Anzahl von gleichen Schritten bei jeder Drehung, dadurch gekennzeichnet, dass er eine Kodiereinheit nach einem der Ansprüche 1, 3, 5 aufweist, wobei die Kodiereinheit synchron mit diesem Schrittmotor dreht, und jede Öffnung oder jeder Schlitz (62, 80) jeweils mindestens einem bestimmten Schritteil des Schrittmotors oder dem ganzen Schritt entspricht.

8. Umsteuerbarer linearer Schrittmotor mit einem geschlossenen Regelkreis, dessen Bewegung einer Anzahl von gleichen Schritten entspricht, dadurch gekennzeichnet, dass er eine Kodiereinheit nach einem der Ansprüche 2, 4, 6 aufweist, wobei die Verschiebung der Kodiereinheitsynchron mit dem Schrittmotor erfolgt, und jede Öffnung oder jeder Schritt jeweils mindestens einem bestimmten Schritteil des Schrittmotors oder dem ganzen Schritt entspricht.

F I G. I

F I G. 2

FIG. 3

ART ANTERIEUR

ROTATION

1/2 PAS

1 PAS

FIG. 4

2

FIG. 5

ANGLE D'AVANCE

ART ANTERIEUR

SIGNAL DE REACTION ANTIHORAIRE

ROTATION

ANGLE D'AVANCE

SIGNAL DE REACTION HORAIRE

ROTATION

FIG. 6

FIG. 7

SIGNAL DE REACTION HORAIRE

ANGLE D'AVANCE

ROTATION

SIGNAL DE REATION ANTIHORAIRE

ANGLE D'AVANCE

ROTATION

FIG. 8

FIG. 9

CELLULE

EN POSITION
ORIGINALE 72

CELLULE DANS
UNE AUTRE
POSITION 72'

FIG. 10